# EUROPEAN PATENT SPECIFICATION

(11) **EP 1 981 248 B1**
(45) Date of publication and mention of the grant of the patent: **19.06.2013**
(21) Application number: 08250812.8
(22) Date of filing: 10.03.2008
(51) Int. Cl.: H04L 29/08, H04L 29/06, G06F 17/30

(54) **Terminal control method and service provision system using SIP messaging.**
Verfahren zur Endgerätsteuerung und Dienstleistungssystem mit SIP messaging.
Procédé de contrôle de terminal et système de fourniture de services utilisant les messages SIP.

(30) Priority: 09.03.2007 JP 2007060744
(43) Date of publication of application: 15.10.2008
(73) Proprietor: NEC Corporation, Minato-ku Tokyo 108-8001 (JP)
(72) Inventor: Tanaka, Masashi c/o NEC Corporation, Tokyo (JP)
(74) Representative: Robson, Aidan John

(56) References cited:
- EP-A- 1 737 158
- WO-A-03/056732
- WO-A-2006/070067
- FR-A- 2 842 681
- HERWONO ET AL: "Provisioning and performance of mobility-aware personalized push services in wireless broadband hotspots" COMPUTER NETWORKS, ELSEVIER SCIENCE PUBLISHERS B.V., AMSTERDAM, NL, vol. 49, no. 3, 19 October 2005 (2005-10-19), pages 364-384, XP005030064 ISSN: 1389-1286

## Description

### FIELD OF THE INVENTION

The present invention relates to a terminal control method and a service provision system using the same. More specifically, the invention relates to a terminal control method that uses a SIP (Session Initiation Protocol) defined by RFC3261 and a service provision method using the same.

### BACKGROUND OF THE INVENTION

Patent Document 1 discloses a service provision system capable of providing services of applications except telephones via a relay server that performs session establishment between a client terminal and an application server. Patent Document 1 further describes setting of detailed information on a requested application service in a request line in a SIP request message such as "INVITE".
FR-A-2 842 681 discloses a method and system for providing a service for automatically notifying a user that information meeting particular criteria has been made available on a public network. A notification server sends to a user a notification message containing a URL address of this information on the network.

Patent Document 2 discloses a system that uses the SIP. In this system, a specific application is started at both of terminals that perform Peer-to-Peer communication, thereby allowing various communication services to be performed. Patent Document 2 describes transmission of an application parameter into a payload of a SIP message.
[Patent Document 1
   JP Patent Kokai Publication No. JP-P2005-073236A
[Patent Document 2]
   JP Patent Kokai Publication No. JP-P2003-22250A

### SUMMARY OF THE DISCLOSURE

The entire disclosure of Patent Documents 1 and 2 are incorporated herein by reference thereto. The following analyses are given by the present invention.
However, in the conventional systems described above, there is a problem that it is difficult for a plurality of service providers to perform active service provision. In the system disclosed in Patent Document 1, for example, the relay server only relays a request from the client terminal. Without transmission of any request, service provision from a plurality of application servers cannot be performed.

In the system described in Patent Document 2 as well, only a calling side media terminal (UAC) can transmit information content, and service provision and reception between other service provider and a called side media terminal (UAS) is impossible.

The present invention has been made in view of the circumstances described above. It is an object of the present invention to provide a service provision system in which a plurality of service providers may participate, and in which a service infrastructure for providing various services to a user may be realized.

According to a first aspect of the present invention, there is provided a service provision system that uses a SIP. In the system, each of a service control server and a terminal that receives a service includes a message generation unit that generates a message of a predetermined format, a message sending/receiving unit that sends or receives the message using a SIP MESSAGE method, and a message recognition unit that recognizes the received message. The service control server includes a message definition input/output unit that receives at least a command to be executed by the terminal and a message main body with an access destination described therein. A control unit of the terminal executes the command given from the message recognition unit and accesses an address described in the message main body. With this arrangement, a service is provided.

According to a second aspect of the present invention, a control method for a terminal is provided. The method includes: receiving at least a command to be executed by a terminal and a message main body with an access destination described therein, generating a message of a predetermined format, and sends the generated message to a terminal specified, using a SIP (Session Initiation Protocol), by a service control server. The method further includes: executing the command included in the message and accessing an address described in the message main body, by the terminal that has received the message.

The meritorious effects of the present invention are summarized as follows.
According to the present invention, it becomes possible to realize a service infrastructure that can be used as a platform for various services to be performed through a network. The reason for that is because the present invention is so configured that the message definition input/output unit for a message is provided on a server side and the message is recognized (interpreted) and executed on a terminal side.

### BRIEF DESCRIPTIONS OF THE DRAWINGS

Fig. 1 is a block diagram showing a system configuration in a first exemplary embodiment of the present invention;
Fig. 2 shows an example of a structure of a message sent or received between a server and a user terminal according to the present invention;
Fig. 3 is a block diagram showing respective configurations of a service control server and the user terminal in the first exemplary embodiment of the present invention;
Fig. 4 is a sequence diagram showing a basic operation (terminal control) in the first exemplary embodiment of the present invention;
Fig. 5 is a sequence diagram showing other operation (content delivery) in the first exemplary embodiment of the present invention;
Fig. 6 shows an example of a message input screen when content is delivered to the user terminal;
Fig. 7 is a sequence diagram showing other operation (message display) in the first exemplary embodiment of the present invention;
Fig. 8 is a sequence diagram showing other operation (telephone call transmission) in the first exemplary embodiment of the present invention;
Fig. 9 shows an example of a message input screen when communication with a user terminal is applied for;
Fig. 10 is a sequence diagram showing other operation (waiting for an incoming call) in the first exemplary embodiment of the present invention; and
Fig. 11 is an example of a message input screen when setting information is provided to the user terminal.

### PREFERRED MODES OF THE INVENTION

In the service provision system, the message definition input/output unit of the service control server may receive text information desired to be displayed on the terminal as the message main body. The message generation unit of the service control server may generate the message of the predetermined format with the text information stored in the message main body thereof. The control unit of the terminal may execute display of the text information given from the message recognition unit instead of accessing the address described in the message main body.
The message definition input/output unit of the service control server may receive whether to cause the terminal to execute the command real time or not and may change the command to be set according to content of execution of the command.
The message definition input/output unit of the service control server may receive whether to cause the terminal to transmit a telephone call or not and may change the command to be set according to content of the transmission.
The control method may further, comprise: receiving text information desired to be displayed on the terminal, generating the message of the predetermined format with the text information stored in the message main body thereof, by the service control server. The method may further comprise: executing display of the text information given from a message recognition unit of the terminal instead of accessing the address described in the message main body, by a control unit of the terminal.
Next, preferred modes for carrying out the present invention will be described in detail with reference to drawings.

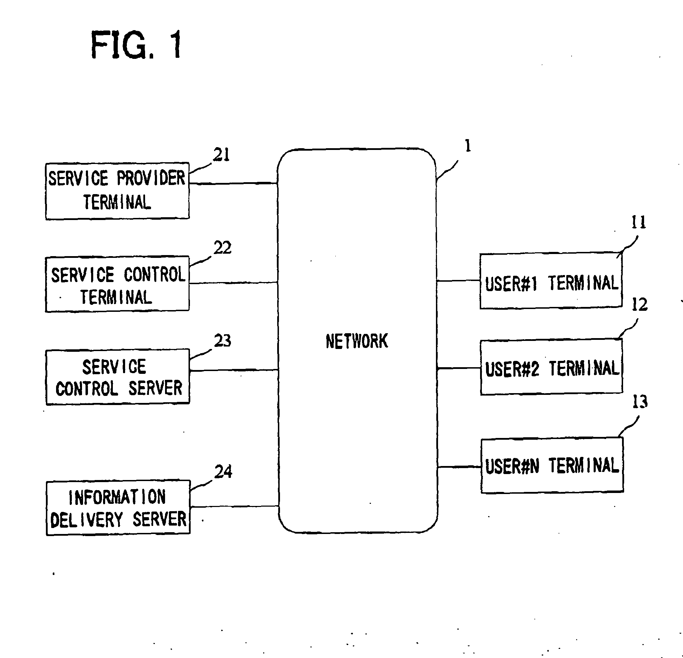

Fig. 1 is a block diagram showing a system configuration in a first exemplary embodiment of the present invention. Referring to Fig. 1, a network 1, a user #1 terminal 11, a user #2 terminal 12, and a user #N terminal 13, a service provider terminal 21, a service control terminal 22, a service control server 23, and an information delivery server 24 are shown. The user #1 terminal 11, user #2 terminal 12, and user #N terminal 13 are used by subscribers of this service (hereinafter referred to as "users"), respectively.

The network 1 is an IP network provided by a communication company, and is a communication network that guarantees a communication band and communication quality (NGN; Next Generation Network; refer to ITU-T Recommendation Y. 2001(12/2004)). The network 1 has a function of controlling a SIP communication session in order to guarantee the communication band and the communication quality between each server and each terminal (client) installed in a service provision (e.g., content delivery) system.

The network 1 provides respective communication functions for unicast communication that is communication between one server and one terminal (client), multicast communication that is communication between one server and a lot of specified terminals (clients), and broadcast communication that is communication between one server and a lot of unspecified terminals (clients).

Each of the user #1 terminal 11, user #2 terminal 12, and user #N terminal 13, service provider terminal 21, service control server 23, and information delivery server 24 has a SIP function, and requests session control to the network 1 in accordance with a SIP.

The user #1 terminal 11, user #2 terminal 12, user #N terminal 13, and service provider terminal 21 are customer premises terminals which include a WEB browser function, a video reproducing function, a communication function using transmission and reception, a telephone and video communication function using transmission and reception, and a function of displaying a text information message. The user #1 terminal 11, user #2 terminal 12, and user #N terminal 13 have a function of simultaneously displaying on a display device thereof screens of one or more functions selected from the respective functions described before.

The service control terminal 22 has a function of displaying a service control screen (a message definition input screen) provided by the service control server 23.

The service control server 23 has a function for executing terminal control over the user #1 terminal 11, user #2 terminal 12, user #N terminal 13, and service provider terminal 21 and executing application control. Details of the service control server 23 will be described later. An application refers to an application program, for example, for implementing the WEB browser function, video reproducing function, communication function using transmission and reception, telephone and video communication function using transmission and reception, or the function of displaying a text information massage of the user #1 terminal 11, user #2 terminal 12, and user #N terminal 13,

The information delivery server 24 has one or more of functions of video delivery, WEB delivery, and transmitting text information to the user #1 terminal 11, user #2 terminal 12, and user #N terminal 13.

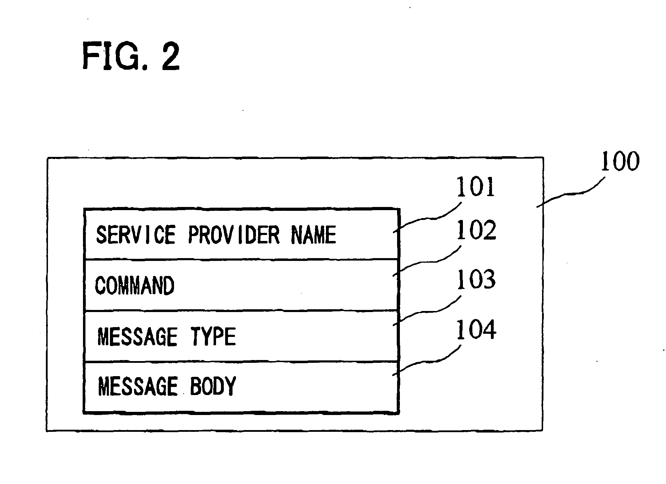

Now, a structure of a message used by the service control server 23 for executing control over the user #1 terminal 11, user #2 terminal 12, user #N terminal 13, and service provider terminal 21 and executing the application control will be described. Fig. 2 is an example of the structure of the message to be sent to each of the terminals 11 to 13 and the service provider terminal 21 from the service control server 23, using a SIP MESSAGE method.

Referring to Fig. 2, a message 100 is formed of items (frames) including a service provider name 101, a command 102, a message type 103, and a message body 104.

ID information given for each service provider in order to recognize and determine which service provider controls each user terminal is stored in the item "service provider name" 101.

Command information for executing control over the user terminals or executing the application control by the service control server 23 is stored in the item "command" 102. For example, a command for automatically starting the application, storing (caching) information related to the application control, or updating the application being displayed, a command for registering information for controlling the application in a database held by each terminal or deleting registered information held by the database, a command for automatically controlling transmission from an own terminal or reception of transmission from other terminal at the own terminal so as to implement the communication function, a command for controlling to disconnect a communication state, a command for terminating the application started by each user terminal, a command for notifying a state of the controlled terminal, or the like is stored.

Type information on information for accessing the information delivery server 24 is stored in the item "message type" 103. For example, type information on pieces of information described in the message body 104 such as a "WEB URL" for accessing a WEB server, a "VoD URL" for accessing a VoD (Video on Demand) server that performs unicast video delivery, a "multicast group address" for accessing a video delivery server that performs multicast or broadcast video delivery, a "telephone number" for making a telephone call, or "text information" indicating a message, or "terminal, control information indicating information for controlling one of the terminals" is set.

In the item "message body" 104, specific information on the content defined by the message type 103 described above such as the "WEB URL", "VoD URL", "multicast group address", "telephone number", a message main body, terminal control information or the like is stored.

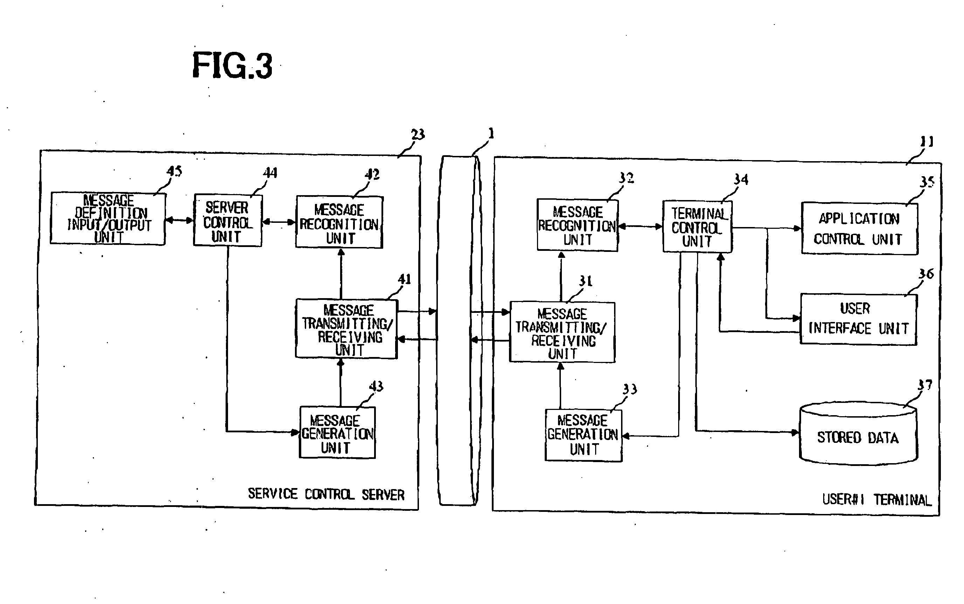

Now, a functional block configuration of each of the service control server 23 and the user #1 terminal 11 will be described with reference to Fig. 3. In an example in Fig. 3, the user #1 terminal 11 is illustrated. The user #2 terminal 12, user #N terminal 13, and service provider terminal 21 may also be configured in the same manner.

The service control server 23 is configured by including a message sending and receiving unit 41 that sends to the user #1 terminal 11 or receives from the user #1 terminal 11 a message through the network, using a SIP MESSAGE function, a message recognition unit 42 that recognizes the received message, a message generation unit 43 that generates the message, a server control unit 44 that controls the service control server 23, and a message definition input/output unit 45 for receiving the message 100 from the server control unit 44 or outputting the message 100 to the server control unit 44.

On the other hand, the user #1 terminal 11 is configured by including a message sending/receiving unit 31 that sends to the service control server 23 or receives from the service control server 23 the message through the network 1, using the SIP MESSAGE function, a message recognition unit 32 that recognizes the received message, a message generation unit 33 that generates the message, a terminal control unit 34 that controls the user #1 terminal 11, an application control unit 35 that controls start and stop of the application, a user interface unit 36 that implements a function of simultaneously displaying a plurality of applications and executes remote control over a subscriber terminal by a subscriber, and stored data 37 in which information notified by the message and information on terminal setting are stored.

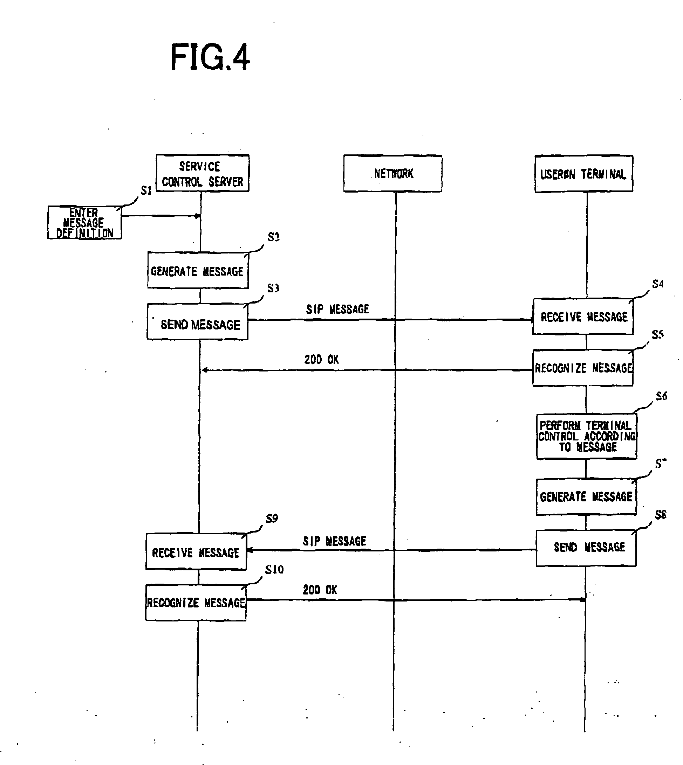

An example of an operation of executing user terminal control and application linkage control will be described below in detail, with reference to Figs. 4 to 8.

### (User Terminal Control)

Fig. 4 is a sequence diagram showing an operation outline when the user #N terminal 13 is made to execute arbitrary processing. First, the service control terminal 22 operated by a service provider that desires the user #N terminal 13 to perform a predetermined operation accesses the service control server 23, so that message definition input is performed (in step S1).

Content of the input received by the message definition input/output unit 45 of the service control server 23 is sent to the message generation unit 43 via the service control unit 44. Then, generation of the message 100 is performed (in step S2).

The message sending/receiving unit 41 sends the message 100 generated by the message generation unit 43 to the user terminal, using the SIP MESSAGE function (in step S3). Incidentally, the service control server 23 can specify all of the user terminals 11 to 13, or an arbitrary one of the user terminals 11 to 13 and can send the message 100 to all of the user terminals 11 to 13 or the arbitrary one of the user terminals 11 to 13. A description, however, will be given below, assuming that the message 100 is sent to the user #N terminal 13.

Upon reception of the message (in step S4), the message sending/receiving unit 31 of the user #N terminal 13 sends the message to the message recognition unit 32, thereby causing the message recognition unit 32 to perform recognition processing on the message 100 (in step S5).

As the recognition processing, the message recognition unit 32 of the user #N terminal 13 determines whether a format of the message 100 is proper and whether each information in the message 100 is correct or not (e.g. whether a service provider ID stored in the service provider name 101 of the message 100 is the ID of a service provider authorized by the user of the user #N terminal 13). When the message 100 can be recognized to be correct, the message generation unit 33 generates a response message and the message sending/receiving unit 31 then sends the generated response message, using the SIP MESSAGE function.

Next, the user #N terminal 13 performs processing in accordance with content described in the command 102, message type 103, and message body 104 of the message 100 (in step S6). The terminal control unit 34 of the user #N terminal 13 controls the application control unit 35, user interface unit 36, and stored data 37 stored in a data storage unit, and executes the content of the application linkage control and the terminal control, input in step S1.

When the above-mentioned processing in accordance with the message 100 is completed, the terminal control unit 34 of the user #N terminal 13 causes the message generation unit 33 to generate a (terminal state) message 100 that notifies a state of the user #N terminal 13 (in step S7). As content of this message, completion of execution of the content of the application linkage control and the terminal control, input in step S1, and the state of the user #N terminal after the execution are described.

The message sending/receiving unit 31 of the user #N terminal 13 that has received the message 100 from the message generation unit 33 sends the message 100 to the service control server 23, using the SIP MESSAGE function (in step S8).

The service control server 23 executes reception of the message (in step S9) and recognition processing on the message (in step S10), as in the above-mentioned message reception processing (in step S4) and the above-mentioned message recognition processing (in step S5) of the user #N terminal 13. When the message can be confirmed to be correct, the service control server 23 sends a response message using the SIP MESSAGE function.

As described above, by allowing message input to the message definition input/output unit 45 of the service control server 23, it becomes possible to open to a plurality of service providers a service infrastructure that executes control over the user terminals.

### (Content Delivery)

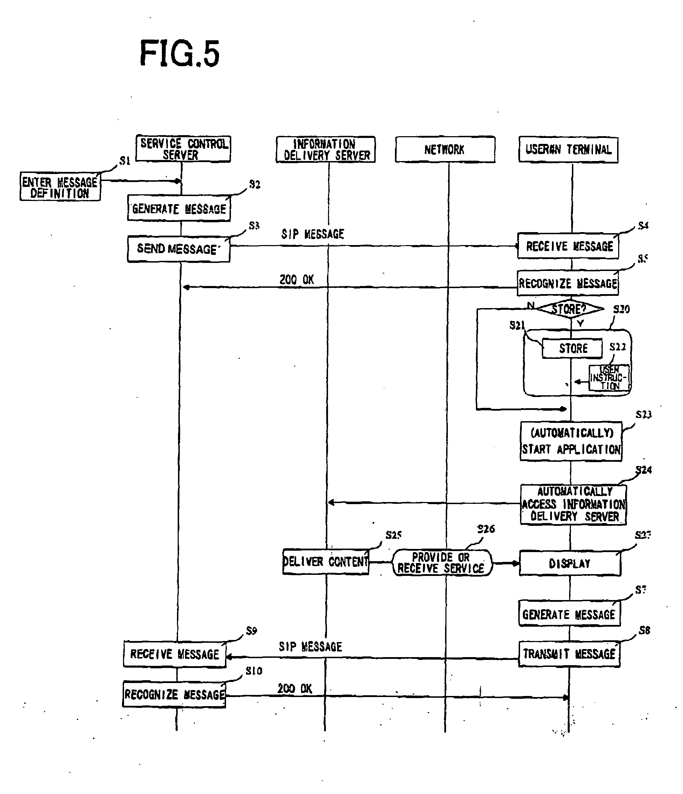

Fig. 5 is a sequence diagram showing an overview of processing when arbitrary content is delivered to the user #N terminal 13. When the content delivery is performed to the user terminal, the WEB URL, VoD URL, multicast group address, terminal control information, or the like is set in each of the message type 103 and the message body 104 at a time of input of the message 100 (in step S1).

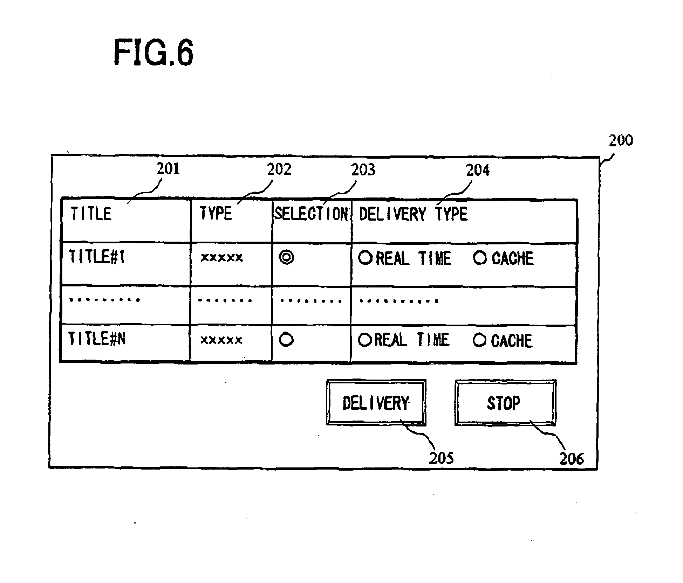

Fig. 6 shows an example of a screen when the service control server 23 receives a request for delivering WEB information, video, or text information through the message definition input/output unit 45. Referring to Fig. 6, elements such as a title 201, a type 202, selection 203, a delivery type 204, a delivery button 205, and a stop button 206 are arranged on an input screen 200.

A title name of information content capable of being delivered from the information delivery server 24 is displayed in the title 201. A type of information to be delivered, or the type such as WEB delivery, video delivery (VoD), (multicast or broadcast) video delivery, or text information is displayed in the "type" 202. As the "delivery type" 204, real time or cache (storage), for example, can be selected. By selecting the information content using the "selection" 203 and activating (clicking) the delivery button 205, input of the message 100 is completed.

In this case, the WEB URL, VoD URL, multicast group address, or message text information of the selected information content is mapped into the message body 104 of the message 100, information on the type (of information) 202 is mapped into the "message type" 103 of the message 100, and a command in accordance with selection of the "delivery type" 204 is mapped into the "command" 102 of the message 100, in the message generation unit 43.

When the stop button 206 in Fig. 6 is activated (clicked), the message 100 for terminating the application being executed at the user terminal according to the sent message 100 is sent.

Since subsequent steps S2 to S5 and subsequent steps S7 to S 10 in Fig. 5 are the same as those for the operation when control over the user terminal described before is performed, steps S20 to S27 in Fig. 5 will be described below.

First, when the message type 103 of the message 100 is one of the WEB URL, VoD URL, and multicast group address, and when the command 102 is a storage (cache) command, the user #N terminal 13 stores all of information received according to the message 100, as the stored data 37 in the data storage unit (in step S21).

Then, when an instruction from the user of the user #N terminal 13 is given, using a remote controller or the like (in step S22), the terminal control unit 34 of the user #N terminal 13 starts the application (in step S23). The start of the application is realized by displaying the information stored as the stored data 37 and receiving the instruction using the remote controller or the like by the user interface unit 36 and transmitting the instruction to the application control unit 35 by the terminal control unit 34.

By the application starting process that uses the storage (in step S21) and the user instruction (in step S22) (brought together as step S20) described above, the user of the user #N terminal 13 can asynchronously browse, view, and listen to information content provided from a service provider at a time convenient for the user.

On the other hand, when the message type 103 of the message 100 is one of the WEB URL, Vod URL, and multicast group address and when the command 102 is a command for automatically starting the application and updating the application being displayed, the user #N terminal 13 skips step S20 (including steps S21 and S22), and automatically starts the application (in step S23) without waiting for an operation by the user.

The started application accesses the information delivery server 24 based on a description of the message body 104 (in step S24).

The accessed information delivery server 24 starts content delivery to the user #N terminal 13 (in step S25), and by provision and reception of a service by the user #N terminal 13 (in step S26), the user #N terminal 13 displays information received from the video delivery server 24 onto a monitor or a television screen (in step S27).

As described above, two ways of the content delivery where the message 100 sent from the service control server 23 is stored (in step S20) and where the message 100 is automatically displayed (with step S20 skipped), can be received.

Both of the storage and the automatic display described above may be performed while the user is viewing or listening to other delivered video or while the user is on a phone. This allows the user to confirm content of the message 100 using other window, upon reception of the message 100 from the service provider, and then receive the service.

### (Text Display)

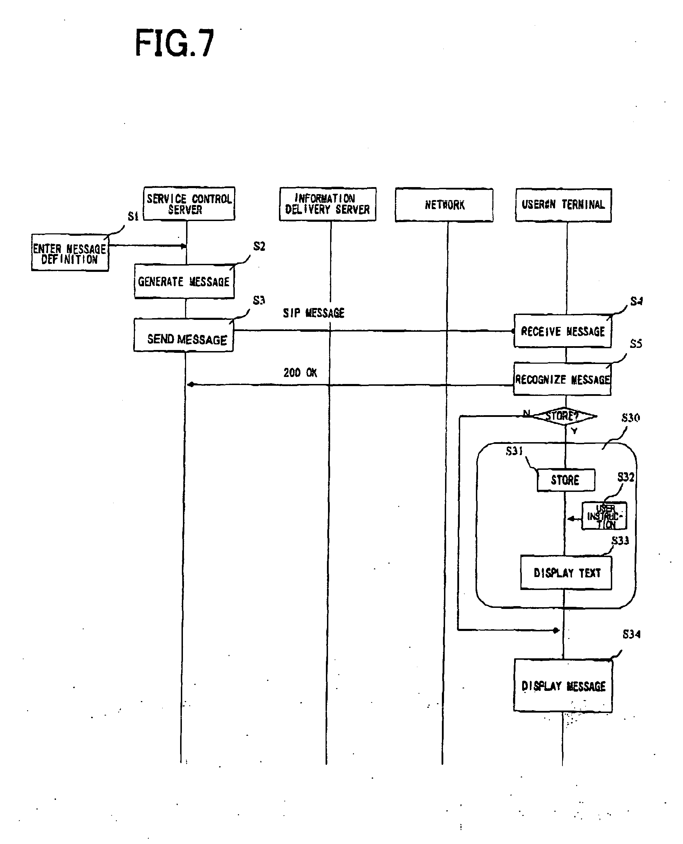

Fig. 7 is a sequence diagram showing an outline of processing when the user #N terminal is made to display an arbitrary text such as news or an advertisement. When display of the arbitrary text on the user terminal is desired, an indication of the "text information" and a text main body are set in the message type 103 and the message body 104, respectively, at a time of input of the message 100 (in step S1; refer to Fig. 6). Steps S2 to S5 are the same as those for the operation when control over the user terminal described before is performed. Thus, steps S30 to S34 in Fig. 7 will be described below.

First, when the message type 103 of the message 100 indicates the text information and when the command 102 is the storage (cache) command, the user #N terminal 13 stores all of information received according to the message 100, as the stored data 37 (in step S31).

Then, when an instruction is given from the user of the user #N terminal 13 using the remote controller (in step S32), the terminal control unit 34 of the user #N terminal 13 (automatically) starts a text display application (in step S33). Start of the application is realized by displaying the information stored as the stored data 37 and receiving the instruction using the remote controller or the like by the user interface unit 36 and sending the instruction to the application control unit 35 by the terminal control unit 34.

By the text display starting process using the storage (in step S31) and the user instruction (in step S32) (brought together as step S30) described above, the user of the user #N terminal 13 can asynchronously browse, view, and listen to the text information provided from a service provider at a time convenient for the user.

On the other hand, when the message type 103 of the message 100 indicates the text information and when the command 102 is the command for automatically starting the application and updating the application being displayed, the user #N terminal 13 skips step S30 (formed of steps S31 and S33), and automatically starts the text display application and displays text information described in the message body 104 without waiting for an operation by the user (in Step S34).

As described above, two ways of the text display where the message 100 sent from the service control server 23 is stored (in step S30) and the message 100 is automatically displayed (with step S30 skipped) can be performed.

Both of the cases for storing and the automatic displaying described above may be performed while the user is viewing or listening to other delivered video or while the user is on a phone. This allows the user to confirm content of the message 100 using other window or the like, upon reception of any message 100 from any service provider, and then refer to a text.

### (Telephone Call Transmission)

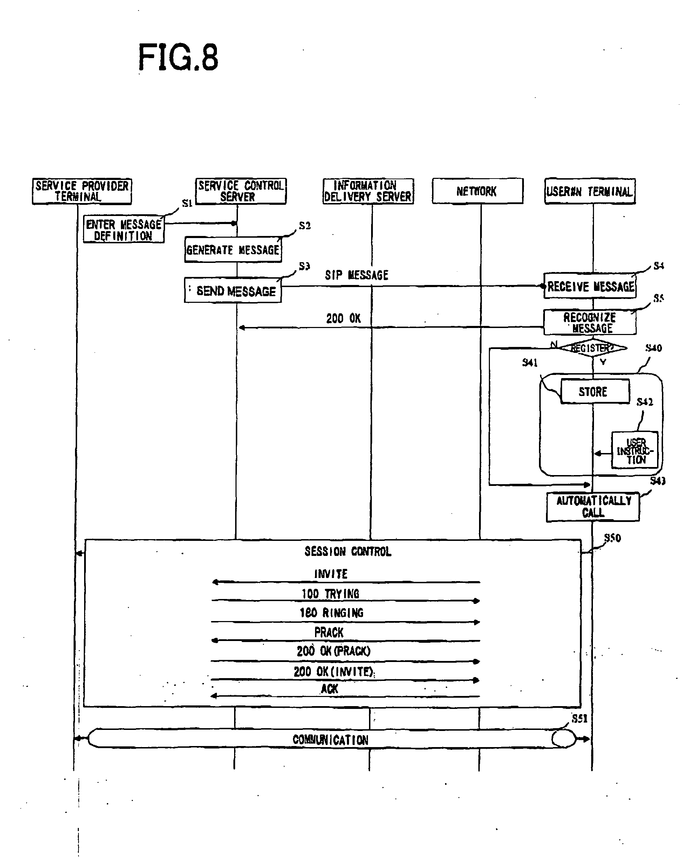

Fig. 8 is a sequence diagram showing an outline of processing when the user #N terminal 13 is made to make a telephone call to the service provider terminal 21. When a telephone call from a service terminal to other SIP terminal is desired to be made, an indication of the "telephone number" and the telephone number of the other SIP terminal are set in the message type 103 and the message body 104, respectively, at a time of input of a message 100 (in step S1).

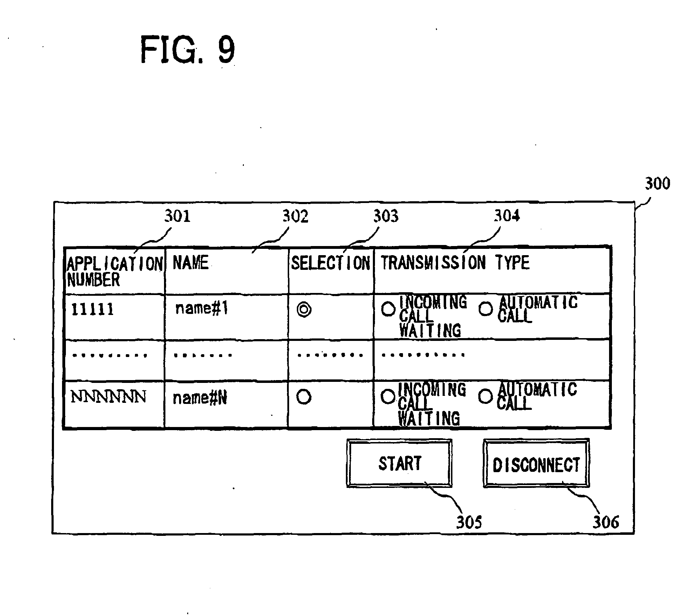

Fig. 9 shows an example of a screen when the service control server 23 receives an application for a telephone call through the message definition input/output unit 45. Referring to Fig. 9, on an input screen 300, elements (items) such as an application number 301, a name 302, selection 303, a transmission type 304, a start button 305, and a disconnection button 306 are arranged.

In the application number 301, a telephone number or a number for a unique identifier assigned by a service provider in order to identify a subscriber, is displayed. In the name 304, the name of a user that participates in the service is displayed. As the transmission type 304, waiting for an incoming call or automatic call may be selected. By selecting a communication party by the selection 303 and activating (clicking) the start button 305, input of the message 100 is completed.

In this case, when the selected user application number 301 indicates the telephone number, the application number 301 is mapped into the message body 104 of the message 100 as the telephone number (when the user application number 301 does not indicate the telephone number, telephone book information or the like may be referred to as necessary), and a command in accordance with selection of the transmission type 304 is mapped into the command 102 of the message 100. An indication of the telephone number is given to the message type 103 of the message 100.

When the disconnection button 306 in Fig. 9 is activated (clicked), the message 100 for terminating the call started according to the sent message 100 is sent.

Next steps S2 to S5 in Fig. 8 are the same as those for the operation for controlling the user terminal described before. Accordingly, a description will be directed to steps S40 to S5 in Fig. 8.

First, when the message type 103 of the message 100 indicates the telephone number and when the command 102 is a command to register (cache) and perform transmission from the own terminal, the user #N terminal 13 stores all of information received according to the message 100 as the stored data 37 (in step S41).

Then, when an instruction from the user of the user #N terminal 13 is given using the remote controller or the like (in step S42), the terminal control unit 34 of the user #N terminal 13 starts a TV telephone application, and makes a call to the telephone number described in the message body 104 (in step S43). Start of the communication application is realized by displaying the information stored as the storage data 37 and receiving the instruction using the remote controller or the like by the user interface unit 36 and sending the instruction to the application control unit 35 by the terminal control unit 34.

By the automatic call start process using the storage (in step S41) and the user instruction (in step S42) (brought together as step S40), the user of the user #N terminal 13 can asynchronously make a call to the telephone number notified from the service provider at a time convenient for the user,

On the other hand, when the message type 103 of the message 100 indicates the telephone number and when the command 102 is a command to perform transmission from the own terminal, the user #N terminal 13 skips step S40 (formed of steps S41 and S42), and automatically starts the TV telephone application and makes the call to the telephone number described in the message body 104 without waiting for an operation by the user (in step S43).

Then, session control for controlling a session of a telephone or a TV telephone is performed between the user #N terminal and the service provider terminal 21 that will become a communication party (in step S50). Then, in a stage where the session is established, communication between the user #N terminal 13 and the service provider terminal 21 is performed (in step S51).

As described above, two ways of telephone call transmission processing where the telephone number delivered from the service control server 23 is registered (to make a call later) (in step S40) and the immediate transmission (with step S40 skipped) can be performed.

Both of the registration and the automatic transmission (sending) described above may be performed while the user is viewing or listening to other delivered video or while the user is WEB browsing (i.e., without interruption of current participation (viewing etc.)). This allows the user to confirm content of the message 100 using other window, upon reception of the message 100 from the service provider, and then make a two-party call or a multipoint call with any service provider(s) and other user(s).

### (Telephone Call Reception)

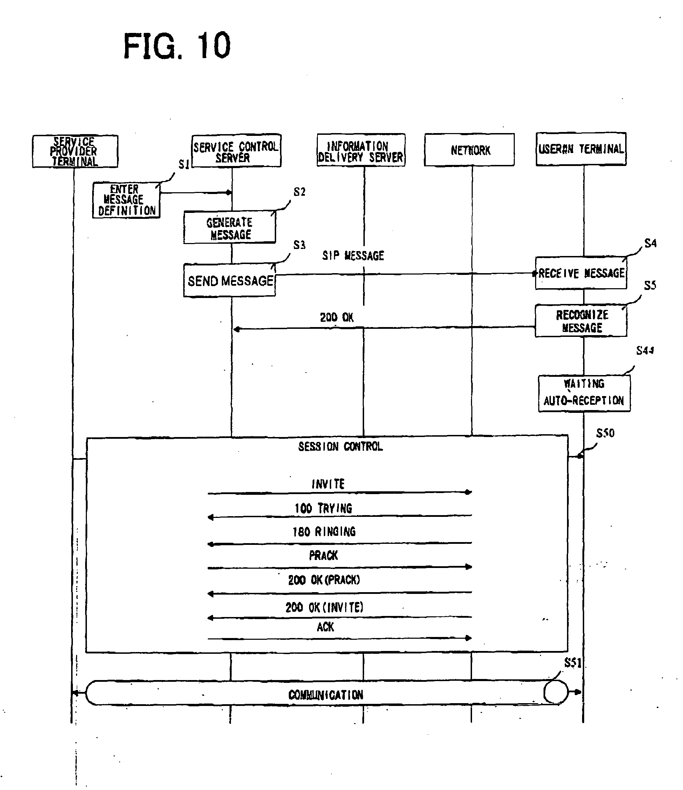

Fig. 10 is a sequence diagram showing an outline of processing when the user #N terminal 13 is made to perform an incoming telephone call waiting operation. When reception of a telephone call from other SIP terminal by the user terminal is desired, the indication of the "telephone number" and the telephone number of the other SIP terminal are set in the message type 103 and the message body 104, respectively, at a time of input of the message 100 (in step S1). Steps S2 to S5 are the same as those for the operation when control over the user terminal described before is performed. Thus, steps from step S44 onward in Fig. 10 will be described below.

First, when the message type 103 of the message 100 indicates the telephone number and when the command 102 is a command to wait for auto-reception to an incoming call from other party to the own terminal, the user #N terminal 13 stores all of information received according to the message 100 as the storage data 37 (in step S44).

When the transmission from the service provider terminal 21 is then performed, session control for controlling a telephone or TV telephone session is performed between the service provider terminal 21 and the user #N terminal 13 (in step S50). In a stage where the session has been established, communication between the user #N terminal 13 and the service provider terminal 21 is performed (in step S51).

As described above, control for an automatic response to the incoming call from the telephone number delivered from the service control server 23 becomes possible. In this case, too, the above-mentioned incoming call waiting operation may be performed while the user may be viewing or listening to other delivered video or WEB browsing. This allows the user to confirm content of the message 100 using other window (etc.), upon reception of the message 100 from a service provider, and then make a two-party call or a multipoint call among the service provider and other user.

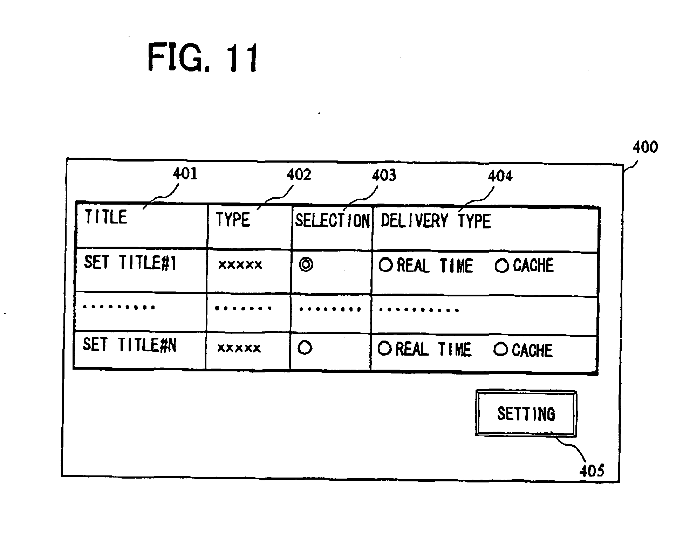

The above description was directed to a preferred exemplary embodiment of the present invention. Various modifications, however, may be possible without departing from the gist of the present invention. Using a message input screen for transmitting to the user terminal setting information desired to be set, as shown in Fig. 11, for example, the terminal setting information can be transmitted to the user terminal real time or by a cache method.

In an example in Fig. 11 showing a display screen 400, a title name of the terminal setting information capable of being delivered from the information delivery server 24 is displayed in a column "title" 401. In a column "type" 402, a type of the terminal setting information to be delivered, such as a firmware updating program or the terminal setting information is displayed. As a "delivery type" 404, real time or cache (storage), for example, can be selected. By selecting the terminal setting information by "selection" 403 and activating (clicking) a setting button 405, input of the message 100 is completed.

In this case, in the message generation unit 43, the WEB URL of the selected terminal setting information or text information related to terminal setting is mapped into the message body 104 of the message 100. Information on the type 402 is mapped into the message type 103 of the message 100. A command in accordance with selection of the "delivery type" 404 is mapped into the command 102 of the message 100.

As described above, it becomes possible for a service provider that does not hold a specific service infrastructure to provide various services to each user terminal.

The above description was made about preferred exemplary embodiments of the present invention. Various modifications, however, may be possible without departing from the gist of the present invention. To take an example, in the exemplary embodiment described above, the description was given, assuming that the service control terminal 22, service control server 23, and information delivery server 24 are prepared for, respectively. However, according to the number of service providers that participate in the service provision system of the present invention or according to the service to be provided, the service control terminal 22, service control server 23, and information delivery server 24 may be integrated, or a plurality of the service control terminals 22, service control servers 23, and information delivery servers 24 may be installed.

In the exemplary embodiments described above, the description was given, assuming that the service provider terminal 21 provides the service to each of the user terminals 11 to 13. As clear from the description described above, provision and reception of the service among the user terminals 11 to 13 may be performed. To take an example, the invention may be applied to a use as well where the user # terminal 11 registers an image, video content, and the like in the information delivery server 24, sends a message to other user #2 terminal 12 and user #N terminal 13 using the SIP MESSAGE method, and causes the other user #2 terminal 12 and user #N terminal 13 to download the image, video content, and the like.
It should be noted that other objects, features and aspects of the present invention will become apparent in the entire disclosure and that modifications may be done as disclosed herein and claimed as appended herewith.

Also it should be noted that any combination of the disclosed and/or claimed elements, matters and/or items may fall under the modifications aforementioned.

## Claims

1. A service provision system using the Session Initiation Protocol, SIP, comprising:
a service control server (23);
a plurality of service providers (21) connected to a network;
a plurality of user terminals (11, 12, 13) connectable to the network;
wherein said service control server (23) is adapted to control communications between one of the service providers (21) and at least one of the user terminals (11, 12, 13);
wherein said service control server (23) is adapted to transmit a SIP message, via the network (1), to at least one of the user terminals, the SIP message including identification information of any one of the service providers, a massage type, a message body and a command for execution by said at least one of the user terminals,
whereupon said at least one of the user terminals is adapted to determine, on the terminal side, whether or not the identification information and the command contained in the SIP message is correct;
wherein the service control server (23) is adapted to receive, from a service control terminal (22) operated by one of the service providers a request for delivering Web information, video or text information through a message definition input/output unit (45) of the service control server, wherein the request includes a delivery type and wherein said message definition input/output unit comprises an input screen (200) for selecting a delivery type, real time or cache;
wherein the service control server (23) comprises a message generation unit (43) for receiving content of the input received by the message definition input/output unit (45) of the service control server and for generating the SIP message, wherein a command in accordance with the selection of the delivery type is mapped into the command of the SIP message;
wherein the service control server (23) is adapted to execute terminal control over said at least one of the user terminals (11, 12, 13) by sending the SIP message to said at least one of the user terminals;
wherein when the message type of the SIP message is one of the WEB URL, Video on Demand URL, and multicast group address and when the command is a command for automatically starting an application of the said at least one of the user user terminals, the said at least one of the user terminals is adapted to start the application to access an information delivery server based on a description of the SIP message body;
wherein when the message type of the SIP message indicates text information and when the command is a command for automatically starting an application of the said at least one of the user terminals, the said at least one of the user terminals is adapted to start a text display application to display text information described in the SIP message body;
wherein when the command is a storage command, the said at least one of the user terminals is adapted to store all of the information received according to the SIP message.

2. A service provision system according to claim 1 wherein the message definition input/output unit (45) at said service control server is adapted to receive text information desired to be displayed on said terminal as the message main body; and
wherein the message generation unit (43) of said service control server is adapted to generate a message of predetermined format with the text information stored in the body thereof, and a control unit (35) of one of the terminals is adapted to execute a display of the text information.

3. A method for service provision using the Session Initiation Protocol, SIP, in a network comprising a service control server (23), a plurality of service providers (21) connected to a network, and a plurality of user terminals (11, 12, 13) connectable to the network comprising the steps of:
the service control server (23) controlling communications between one of the service providers (21) and at least one of the user terminals (11, 12, 13);
the service control server (23) transmitting a SIP message, via the network (1), to at least one of the user terminals, the SIP message including identification information of any one of the service providers, a message type, a message body and a command for execution by said at least one of the user terminals,
at least one of the user terminals determining, on the terminal side, whether or not the identification information and the command contained in the SIP message is correct;
the service control server (23) receiving, from a service control terminal (22) operated by one of the service providers a request for delivering Web information, video or text information through a message definition input/output unit (45) of the service control server, wherein the request includes a delivery type and wherein said message definition input/output unit comprises an input screen (200) for selecting a delivery type, real time or cache;
wherein the service control server (23) comprises a message generation unit (43) for receiving content of the input received by the message definition input/output unit (45) of the service control server and for generating the SIP message, wherein a command in accordance with the selection of the delivery type is mapped into the command of the SIP message;
the service control server (23) executing terminal control over said at least one of the user terminals (11, 12, 13) by sending the SIP message to said at least one of the user terminals
wherein when the message type of the SIP message is one of the WEB URL, Video on Demand URL, and multicast group address and when the command is a command for automatically starting an application of the said at least one of the user terminals, the said at least one of the user terminals starting the application to access an information delivery server based on a description of the SIP message body;
wherein when the message type of the SIP message indicates text information and when the command is a command for automatically starting an application of the said at least one of the user terminals, the said at least one of the user terminals starts a text display application to display text information described in the SIP message body;
wherein when the command is a storage command, the said at least one of the user terminals stores all of the information received according to the SIP message.

## Patentansprüche

1. Dienstbereitstellungssystem unter Verwendung eines SIP (Session Initiation Protocol), das Folgendes umfasst:
einen Dienststeuerserver (23);
mehrere einem Netz zugeschaltete Diensteanbieter (21);
mehrere dem Netz zuschaltbare Benutzerendgeräte (11, 12, 13);
wobei der genannte Dienststeuerserver (23) zum Steuern der Kommunikationen zwischen einem der Diensteanbieter (21) und wenigstens einem der Benutzerendgeräte (11, 12, 13) ausgelegt ist;
wobei der genannte Dienststeuerserver (23) so ausgelegt ist, dass er eine SIP-Nachricht über das Netz (1) zu wenigstens einem der Benutzerendgeräte sendet, wobei die SIP-Nachricht Identifikationsinformationen von einem beliebigen der Diensteanbieter, einen Nachrichtentyp, einen Nachrichtentext und einen Befehl zum Ausführen durch wenigstens eines der Benutzerendgeräte beinhaltet,
wonach das genannte wenigstens eine der Benutzerendgeräte so ausgelegt ist, dass es auf der Endgeräteseite ermittelt, ob die in der SIP-Nachricht enthaltenen Identifikationsinformationen und Befehle korrekt sind;
wobei der Dienststeuerserver (23) so ausgelegt ist, dass er von einem von einem der Diensteanbieter betriebenen Dienststeuerendgerät (22) eine Anforderung zum Liefern von Webinformationen, Video- oder Textinformationen durch eine Nachrichtendefinition-Ein-/Ausgabeeinheit (45) des Dienststeuerservers empfängt, wobei die Anforderung einen Liefertyp beinhaltet und wobei die genannte Nachrichtendefinition-Ein-/Ausgabeeinheit einen Eingabeschirm (200) zum Auswählen von Liefertyp, Echtzeit oder Cache umfasst;
wobei der Dienststeuerserver (23) eine Nachrichterzeugungseinheit (43) zum Empfangen von Inhalt der von der Nachrichtendefinition-Ein-/Ausgabeeinheit (45) des Dienststeuerservers empfangenen Eingabe und zum Erzeugen der SIP-Nachricht umfasst, wobei ein Befehl gemäß der Wahl des Liefertyps in den Befehl der SIP-Nachricht gemappt wird;
wobei der Dienststeuerserver (23) so ausgelegt ist, dass er Endgerätesteuerung über das genannte wenigstens eine der Benutzerendgeräte (11, 12, 13) durch Senden der SIP-Nachricht zu dem genannten wenigstens einen der Benutzerendgeräte ausführt;
wobei, wenn der Nachrichtentyp der SIP-Nachricht WEB-URL, Video-on-Demand-URL oder Multicast-Gruppenadresse ist und wenn der Befehl ein Befehl zum automatischen Starten einer Anwendung des genannten wenigstens einen der Benutzerendgeräte ist, das genannte wenigstens eine der Benutzerendgeräte so ausgelegt ist, dass es die Anwendung zum Zugreifen auf einen Informationslieferserver auf der Basis einer Beschreibung des SIP-Nachrichtentextes startet;
wobei, wenn der Nachrichtentyp der SIP-Nachricht Textinformationen anzeigt und wenn der Befehl ein Befehl zum automatischen Starten einer Anwendung des genannten wenigstens einen der Benutzerendgeräte ist, das genannte wenigstens eine der Benutzerendgeräte so ausgelegt ist, dass es eine Textanzeigeanwendung zum Anzeigen von im SIP-Nachrichtentext beschriebenen Textinformationen startet;
wobei, wenn der Befehl ein Speicherbefehl ist, das genannte wenigstens eine der Benutzerendgeräte so ausgelegt ist, dass es alle gemäß der SIP-Nachricht empfangenen Informationen speichert.

2. Dienstbereitstellungssystem nach Anspruch 1, wobei die Nachrichtendefinition-Ein-/Ausgabeeinheit (45) an dem genannten Dienststeuerserver so ausgelegt ist, dass sie Testinformationen empfängt, die auf dem genannten Endgerät als Nachrichtentext angezeigt werden sollen;
wobei die Nachrichtenerzeugungseinheit (43) des genannten Dienststeuerservers so ausgelegt ist, dass sie eine Nachricht in einem vorbestimmten Format mit den im Text davon gespeicherten Textinformationen erzeugt, und eine Steuereinheit (35) von einem der Endgeräte so ausgelegt ist, dass sie eine Anzeige der Textinformationen durchführt.

3. Dienstbereitstellungsverfahren unter Verwendung eines SIP (Session Initiation Protocol) in einem Netz, das einen Dienststeuerserver (23), mehrere einem Netz zugeschaltete Diensteanbieter (21) und mehrere dem Netz zuschaltbare Benutzerendgeräte (11, 12, 13) umfasst, das die folgenden Schritte beinhaltet:
Steuern, durch den Dienststeuerserver (23), von Kommunikationen zwischen einem der Dienstanbieter (21) und wenigstens einem der Benutzerendgeräte (11, 12, 13);
Senden, durch den Dienststeuerserver (23), einer SIP-Nachricht über das Netz (1) zu wenigstens einem der Benutzerendgeräte, wobei die SIP-Nachricht Identifikationsinformationen über einen beliebigen der Diensteanbieter, einen Nachrichtentyp, einen Nachrichtentext und einen Befehl zum Ausführen durch das genannte wenigstens eine der Benutzergeräte enthält,
Ermitteln, durch wenigstens eines der Benutzerendgeräte auf der Endgeräteseite, ob die Identifikationsinformationen und der Befehl, die in der SIP-Nachricht enthalten sind, korrekt sind;
Empfangen, durch den Dienststeuerserver (23), von einem Dienststeuerendgerät (22), das von einem der Diensteanbieter betrieben wird, einer Anforderung zum Liefern von Webinformationen, Video- oder Textinformationen durch einen Nachrichtendefinition-Ein-/Ausgabeeinheit (45) des Dienststeuerservers, wobei die Anforderung einen Liefertyp beinhaltet und wobei die genannte Nachrichtendefinition-Ein-/Ausgabeeinheit einen Eingabeschirm (200) zum Auswählen von Liefertyp, Echtzeit oder Cache umfasst;
wobei der Dienststeuerserver (23) eine Nachrichtenerzeugungseinheit (43) zum Empfangen von Inhalt des von der Nachrichtendefinition-Ein-/Ausgabeeinheit (45) des Dienststeuerservers empfangenen Eingangs und zum Erzeugen der SIP-Nachricht umfasst, wobei ein Befehl gemäß der Wahl des Liefertyps in den Befehl der SIP-Nachricht gemappt wird;
Ausführen, durch den Dienststeuerserver (23), von Endgerätesteuerung über das genannte wenigstens eine der Benutzerendgeräte (11, 12, 13) durch Senden der SIP-Nachricht zu dem genannten wenigstens einen der Benutzerendgeräte (11, 12, 13);
wobei, wenn der Nachrichtentyp der SIP-Nachricht die WEB-URL, Video-on-Demand-URL oder Multicast-Gruppenadresse ist und wenn der Befehl ein Befehl zum automatischen Starten einer Anwendung des genannten wenigstens einen der Benutzerendgeräte ist, das genannte wenigstens eine der Benutzerendgeräte die Anwendung zum Zugreifen auf einen Informationslieferserver auf der Basis einer Beschreibung des SIP-Nachrichtentexts startet;
wobei, wenn der Nachrichtentyp der SIP-Nachricht Textinformationen anzeigt und wenn der Befehl ein Befehl zum automatischen Starten einer Anwendung des genannten wenigstens einen der Benutzerendgeräte ist, das genannte wenigstens eine der Benutzerendgeräte eine Textanzeigeanwendung zum Anzeigen von im SIP-Nachrichtentext beschriebenen Textinformationen startet;
wobei, wenn der Befehl ein Speicherbefehl ist, das genannte wenigstens eine der Benutzerendgeräte alle gemäß der SIP-Nachricht empfangenen Informationen speichert.

## Revendications

1. Système de fourniture de services utilisant le Session Initiation Protocol (protocole d'initialisation de session), SIP, comprenant :
un serveur de contrôle de services (23);
une pluralité de fournisseurs de services (21) connectés à un réseau;
une pluralité de terminaux utilisateurs (11, 12, 13) pouvant être connectés au réseau;
dans lequel ledit serveur de contrôle de services (23) est adapté pour contrôler les communications entre l'un des fournisseurs de services (21) et au moins l'un des terminaux utilisateurs (11, 12, 13);
dans lequel ledit serveur de contrôle de services (23) est adapté pour transmettre un message SIP par le réseau (1) à au moins l'un des terminaux utilisateurs, le message SIP comprenant des informations d'identification de l'un quelconque des fournisseurs de services, un type de message, un corps de message et une commande pour exécution par ledit au moins l'un des terminaux utilisateurs,
sur quoi ledit au moins l'un des terminaux utilisateurs est adapté pour déterminer, du côté terminal, si les informations d'identification et la commande contenues dans le message SIP sont correctes ou non;
dans lequel le serveur de contrôle de services (23) est adapté pour recevoir, d'un terminal de contrôle de services (22) actionné par l'un des fournisseurs de services, une demande de remise d'informations Web, d'informations vidéo ou texte par une unité d'entrée/sortie de définition de message (45) du serveur de contrôle de services, où la demande comprend un type de remise et où ladite unité d'entrée/sortie de définition de message comprend un écran d'entrée (200) pour sélectionner un type de remise, temps réel ou mémoire cache;
dans lequel le serveur de contrôle de services (23) comprend une unité de génération de messages (43) pour recevoir le contenu de l'entrée reçue par l'unité d'entrée/sortie de définition de message (45) du serveur de contrôle de services et pour générer le message SIP, où une commande conforme à la sélection du type de remise est mappée dans la commande du message SIP;
dans lequel le serveur de contrôle de services (23) est adapté pour exécuter un contrôle de terminal sur ledit au moins l'un des terminaux utilisateurs (11, 12, 13) en envoyant le message SIP audit au moins l'un des terminaux utilisateurs;
dans lequel lorsque le type de message du message SIP est l'un d'entre l'URL Web, l'URL de vidéo à la demande et une adresse d'un groupe de multidestinataire et lorsque la commande est une commande pour commencer automatiquement une application dudit au moins l'un des terminaux utilisateurs, ledit au moins l'un des terminaux utilisateurs est adapté pour commencer l'application pour accéder à un serveur de remise d'informations sur la base d'une description du corps du message SIP;
dans lequel lorsque le type de message du message SIP indique des informations en texte et lorsque la commande est une commande pour commencer automatiquement une application dudit au moins l'un des terminaux utilisateurs, ledit au moins l'un des terminaux utilisateurs est adapté pour commencer une application d'affichage de texte pour afficher les informations en texte décrites dans le corps du message SIP;
dans lequel lorsque la commande est une commande de stockage, ledit au moins l'un des terminaux utilisateurs est adapté pour stocker toutes les informations reçues conformément au message SIP.

2. Système de fourniture de services selon la revendication 1, dans lequel l'unité d'entrée/sortie de définition de message (45) audit serveur de contrôle de services est adaptée pour recevoir des informations en texte que l'on désire afficher sur ledit terminal en tant que corps de message; et dans lequel l'unité de génération de messages (43) dudit serveur de contrôle de services est adaptée pour générer un message d'un format prédéterminé avec les informations en texte stockées dans le corps de celui-ci et une unité de contrôle (35) de l'un des terminaux est adaptée pour exécuter un affichage des informations en texte.

3. Procédé de fourniture de services utilisant le Session Initiation Protocol (protocole d'initialisation de session), SIP, dans un réseau comprenant un serveur de contrôle de services (23), une pluralité de fournisseurs de services (21) connectés au réseau et une pluralité de terminaux utilisateurs (11, 12, 13) pouvant être connectés au réseau, comprenant les étapes consistant à :
le serveur de contrôle de services (23) contrôlant les communications entre l'un des fournisseurs de services (21) et au moins l'un des terminaux utilisateurs (11, 12, 13);
le serveur de contrôle de services (23) transmettant un message SIP par le réseau (1), à au moins l'un des terminaux utilisateurs, le message SIP comprenant des informations d'identification de l'un quelconque des fournisseurs de services, un type de message, un corps de message et une commande pour exécution par ledit au moins l'un des terminaux utilisateurs,
au moins l'un des terminaux utilisateurs déterminant, du côté terminal, si les informations d'identification et la commande contenues dans le message SIP sont correctes ou non;
le serveur de contrôle de services (23) recevant, d'un terminal de contrôle de services (22) actionné par l'un des fournisseurs de services, une demande de remise d'informations Web, d'informations vidéo ou texte par une unité d'entrée/sortie de définition de message (45) du serveur de contrôle de services, où la demande comprend un type de remise et où ladite unité d'entrée/sortie de définition de message comprend un écran d'entrée (200) pour sélectionner un type de remise, temps réel ou mémoire cache;
dans lequel le serveur de contrôle de services (23) comprend une unité de génération de messages (43) pour recevoir le contenu de l'entrée reçue par l'unité d'entrée/sortie de définition de message (45) du serveur de contrôle de services et pour générer le message SIP, où une commande conforme à la sélection du type de remise est mappée dans la commande du message SIP;
le serveur de contrôle de services (23) exécutant un contrôle de terminal sur ledit au moins l'un des terminaux utilisateurs (11, 12, 13) en envoyant le message SIP audit au moins l'un des terminaux utilisateurs;
dans lequel lorsque le type de message du message SIP est l'un d'entre l'URL Web, l'URL de vidéo à la demande et une adresse d'un groupe de multidestinataire et lorsque la commande est une commande pour commencer automatiquement une application dudit au moins l'un des terminaux utilisateurs, ledit au moins l'un des terminaux utilisateurs commençant l'application pour accéder à un serveur de remise d'informations sur la base d'une description du corps du message SIP;
dans lequel lorsque le type de message du message SIP indique des informations en texte et lorsque la commande est une commande pour commencer automatiquement une application dudit au moins l'un des terminaux utilisateurs, ledit au moins l'un des terminaux utilisateurs commence une application d'affichage de texte pour afficher les informations en texte décrites dans le corps du message SIP;
dans lequel lorsque la commande est une commande de stockage, ledit au moins l'un des terminaux utilisateurs stocke toutes les informations reçues conformément au message SIP.
